# EUROPÄISCHE PATENTSCHRIFT

(11) **EP 3 962 260 B1**
(45) Veröffentlichungstag und Bekanntmachung des Hinweises auf die Patenterteilung: **20.11.2024**
(21) Anmeldenummer: 20721585.6
(22) Anmeldetag: 25.04.2020
(51) Int. Cl.: A01D 65/02, A01D 34/22

(54) **TRAGSCHIENE EINES ÄHRENHEBERS FÜR ERNTEGUT**
SUPPORT BAR OF A CROP LIFTER FOR HARVESTED CROPS
RAIL DE SUPPORT D'UN RELEVEUR D'ÉPIS POUR UN PRODUIT À RÉCOLTER

(30) Priorität: 30.04.2019 DE 202019102446 U
(43) Veröffentlichungstag der Anmeldung: 09.03.2022
(73) Patentinhaber: SMF - Holding GmbH, 57612 Eichelhardt (DE)
(72) Erfinder: HÖLLER, Frank, 57629 Stein Wingert (DE)
(74) Vertreter: Neumann Müller Oberwalleney Patentanwälte PartG mbB
(86) Internationale Anmeldenummer: PCT/EP2020/061568
(87) Internationale Veröffentlichungsnummer: WO 2020/221675

(56) Entgegenhaltungen:
- EP-A2- 2 614 700
- WO-A1-2016/198279
- DE-B3- 102009 039 670
- US-A- 1 123 632
- US-A- 1 797 682
- US-A- 3 834 139

## Beschreibung

Die folgende Offenlegung betrifft eine Tragschiene eines Ährenhebers für Erntegut, mit einer Haupterstreckungsrichtung, wobei zwischen einem ersten Ende und einem zweiten Ende der Tragschiene ein als Gleitkufe ausgebildeter Abschnitt angeordnet ist, wobei der als Gleitkufe ausgebildete Abschnitt dazu vorgesehen ist, mit einer Außenseite über einen Boden geführt zu werden, sowie einen Ährenheber für ein Mähwerk einer Erntemaschine, mit einem Halmheber und einer den Halmheber tragenden Tragschiene.

Bei bekannten Erntemaschinen-Mähwerken sind entlang eines Mähbalkens verteilt Mähfinger angeordnet, die den Messerbalken führen und die Gegenschneide für die Mähklingen bilden. Um abgeknicktes oder lagerndes Halmgut sicher mähen zu können, werden Ährenheber eingesetzt, die das Halmgut anheben. Gattungsgemäß weisen die Ährenheber eine Tragschiene und einen Halmheber auf. Die Tragschiene dient der Befestigung des Ährenhebers am Mähbalken des Mähwerks und führt den Halmheber, an dessen Oberseite das Halmgut angehoben wird. Beim Betrieb der Erntemaschine muss die Tragschiene mit geringem Abstand über der Bodenoberfläche geführt werden, damit das abgeknickte bzw. lagernde Halmgut möglichst vollständig und zuverlässig mit dem Halmheber anhebbar ist. Der dem Boden nächstgelegene Abschnitt der Tragschiene schleift dabei annähernd dauerhaft, wie eine Gleitkufe über die Bodenoberfläche. Auf Grund steigender Arbeitsgeschwindigkeiten der Erntemaschinen und der Unebenheiten der Bodenoberfläche ist die Tragschiene einem erheblichen abrasiven Verschleiß ausgesetzt.

Aus der DE 101 23 248 C1 ist ein Ährenheber bekannt, bei dem die Tragschiene in einem Bereich zwischen dem zweiten Ende und einem Halter durch eine Profilierung biegesteif gestaltet ist. Der unmittelbare Bereich am zweiten Ende ist durch die Befestigung des Halmhebers an der Tragschiene bereits ausreichend versteift, so dass sich die Profilierung auf den anschließenden Bereich erstreckt. Dies sind insbesondere der gleitschuhartige Bereich, mit dem die Tragschiene auf dem Boden aufliegt, und der daran anschließende Bereich bis zum Halter. Dazu ist die Tragschiene in diesem Bereich im Querschnitt bogenförmig gewölbt.

Aus der Druckschrift WO 2011/143681 A1 ist ein Ährenheber bekannt, bei dem im vorderen Teil des unteren Oberflächenbereiches des Ährenhebers, welcher bestimmungsgemäß im Betrieb häufig am Untergrund gleitet, ein Fläche angeordnet ist, wobei diese Fläche mit einer Verschleißplattierung aus einem vom Material des Trägers unterschiedlichen Material versehen ist, wobei die Verschleißplattierung durch einen austauschbar am Ährenheber montierten Plattierungsteil gebildet ist.

Die US 1 797 682 A offenbart einen Ährenheber mit einer Tragschiene, wobei der als Gleitkufe ausgebildete Abschnitt auf der Innenseite eine stabilisierende Rippe aufweist, die sich entlang der Tragschiene und des Halmhebers erstreckt.

Die US 1 123 632 A offenbart einen Ährenheber mit einer im Wesentlichen durch eine Rippe gebildete Tragschiene mit einem als Gleitkufe ausgebildete Abschnitt.

Die US 3 834 139 A offenbart einen Ährenheber, der einen Tragschiene aus Flachmaterial aufweist, wobei diese Tragschiene einen Gleitschuh trägt, der sich von seinem unteren vorderen Endbereich unter der Tragschiene nach hinten erstreckt, um über den Boden zu gleiten. Die Tragschiene weist zwischen ihren Endbereichen eine verdrehte Form auf, sodass das Flachmaterial am untere vorderen Endbereich vertikal angeordnet ist.

Eine Aufgabe besteht darin, eine Tragschiene für einen Ährenheber in Bezug auf mindestens eine der Eigenschaften Verschleiß, Biegesteifigkeit und Torsionssteifigkeit durch eine gegenüber dem Stand der Technik weiterentwickelte Profilierung zu verbessern.

Gelöst wird die Aufgabe durch eine Tragschiene für einen Ährenheber und durch einen Ährenheber gemäß der nebengeordneten Ansprüche. In den Unteransprüchen sind Ausführungsformen und vorteilhafte Weiterbildungen angegeben.

Die Tragschiene eines Ährenhebers für Erntegut weist eine Haupterstreckungsrichtung auf, wobei zwischen einem ersten Ende und einem zweiten Ende der Tragschiene ein als Gleitkufe ausgebildeter Abschnitt angeordnet ist. Der als Gleitkufe ausgebildete Abschnitt ist dazu vorgesehen, mit einer Außenseite über einen Boden geführt zu werden. Die Haupterstreckungsrichtung wird auch als Längsachse bezeichnet, wobei diese nicht als Gerade zu verstehen ist, sondern entlang der in der Regel in Längsrichtung gebogenen Tragschiene definiert sein soll. Der als Gleitkufe ausgebildete Abschnitt wird nachfolgend vereinfachend auch lediglich als Gleitkufe bezeichnet. Die Gleitkufe wird beispielsweise durch einen Abschnitt der Tragschiene selbst gebildet, kann jedoch auch als separates Bauteil an der Tragschiene angeordnet sein.

Es ist vorgesehen, dass der als Gleitkufe ausgebildete Abschnitt eine Strebe aufweist, wobei die Strebe sich auf einer der Außenseite gegenüberliegenden Innenseite in der Haupterstreckungsrichtung erstreckt.

Gemäß einer ersten erfindungsgemäßen Variante ist vorgesehen, dass die Strebe in eine Ausnehmung des als Gleitkufe ausgebildeten Abschnitts eingesetzt ist. Die Ausnehmung ist insbesondere als durchgehender Schlitz entlang der Haupterstreckungsrichtung ausgeführt, in den die Strebe eingesetzt ist. Die Strebe ragt dabei beispielsweise auf der der Innenseite über den als Gleitkufe ausgebildeten Abschnitt hinaus. Ein Schlitz weist entlang der Haupterstreckungsrichtung eine mindestens doppelt so große Ausdehnung, beispielsweise mindestens fünfmal so große Ausdehnung, wie in anderen Erstreckungsrichtungen auf.

Gemäß einer zweiten erfindungsgemäßen Variante ist vorgesehen, dass die Strebe eine Grundplatte aufweist, wobei die Grundplatte mit dem als Gleitkufe ausgebildeten Abschnitt verbunden ist. Die Grundplatte erleichtert vorteilhaft die Verbindung der Strebe an dem als Gleitkufe ausgebildeten Abschnitt, insbesondere wenn diese nicht in eine Ausnehmung eingesetzt ist. Die Grundplatte bietet vorteilhaft eine Fläche für die Herstellung einer Klebeverbindung oder für eine Nietverbindung.

Ein Vorteil der Tragschiene besteht darin, dass durch die Strebe ein gegenüber einem einfach gewölbten Profil biegefesteres Profil zur Verfügung gestellt werden kann, dessen Verschleißverhalten zusätzlich verbessert ist. Weiterhin weist die Tragschiene mit der Strebe vorteilhaft eine höhere Torsionssteifigkeit auf, als ein einfach gewölbtes Profil. Das vorteilhaft verbesserte Verschleißverhalten ergibt sich, indem die Tragschiene bei fortschreitendem Verschleiß im Bereich der Gleitkufe eine höhere Stabilität und dadurch eine längere Standzeit bis zu einem Ausfall bietet. Bei Tragschienen mit einfacher Wölbung nach dem Stand der Technik kommt es, wenn die Gleitkufe verschleißt, zu einer Lochbildung in deren Mitte. Das Loch wird mit zunehmendem Verschleiß größer und schwächt die Gleitkufe derart, dass diese ausgetauscht werden muss. Kommt es zu einem Versagen, geht unter Umständen ein Teil der Gleitkufe, bzw. des Ährenhebers, verloren. Im Boden steckende, scharfkantige Bruchstücke können dann beispielsweise einen Reifen des Erntefahrzeugs zerstören. Eine weitere Gefahr bei Verlust des vorderen Teils des Ährenhebers besteht darin, dass dieser in das Schneidwerk gelangt und in Folge die gesamten Dreschorgane der Erntemaschine durchlaufen und dort erheblichen Schaden verursachen kann. Die Folge sind lange Ausfallzeiten und hohe Kosten für die Instandsetzung. Bei der offenbarten Gleitkufe verbleibt auch bei fortgeschrittenem Verschleiß durch die Strebe ein das Loch überbrückender und stabilisierender Steg. Daraus ergibt sich eine vorteilhaft höhere Standzeit der Tragschiene. Des Weiteren sorgt ein fortschreitender Verschleiß zu den Flanken, also den äußeren Bereichen der Gleitkufe neben der Strebe, für ein frühzeitiges Aufschieben von Boden und Erntematerial. Das wird dem Anwender deutlich auffallen, so dass er den Ährenheber auf seine Verschleißgrenze inspizieren kann, ohne Gefahr zu laufen, dass ein Verlust durch eine zu große Schwächung der Verschleißstelle droht.

Gemäß einer Ausführungsform ist vorgesehen, dass die Strebe an der Innenseite mit dem als Gleitkufe ausgebildeten Abschnitt verbunden ist. Dadurch entstehen bei dem zuvor beschriebenen Verschleiß besonders vorteilhaft zwei längliche Schlitze, deren Breite zusammengenommen geringer ist, als die Breite des einzelnen Lochs und deren Fläche geringer ist, als die Fläche des Lochs. Beispielsweise ist die Strebe stoffschlüssig mit dem als Gleitkufe ausgebildeten Abschnitt verbunden, insbesondere durch Schweißen. Alternativ kann die Strebe mit dem als Gleitkufe ausgebildeten Abschnitt vernietet und/oder verklebt sein.

Gemäß einer weiteren Ausführungsform ist vorgesehen, dass die Strebe aus einem anderen Material gefertigt ist, als der als Gleitkufe ausgebildete Abschnitt, bzw. als die übrige Tragschiene. Als anderes Material im Sinne der Offenbarung ist auch ein gleiches Ausgangsmaterial mit anderen Stoffeigenschaften zu verstehen, die beispielsweise durch eine Behandlung des Materials entstehen. Dazu zählen insbesondere eine Härte und/oder eine Festigkeit des Materials, die beispielsweise durch eine Wärmebehandlung veränderbar sind. Härte ist der mechanische Widerstand eines Materials gegen das mechanische Eindringen eines Eindringkörpers. Festigkeit ist die Widerstandsfähigkeit eines Materials gegenüber Verformung und Trennung. Härte und Festigkeit sind nach dem Fachmann bekannten Werkstoffprüfungsverfahren bestimmbar. Beispielsweise ist die Strebe aus einem Material gefertigt, dass eine größere Härte und/oder Festigkeit aufweist, als das Material, aus dem der als Gleitkufe ausgebildete Abschnitt hergestellt ist.

Gemäß einer weiteren Ausführungsform ist vorgesehen, dass die Strebe rippenförmig ausgebildet ist, wobei die Strebe mit dem als Gleitkufe ausgebildeten Abschnitt einen T-förmigen Querschnitt in einem Schnitt quer zu der Haupterstreckungsrichtung aufweist. Der als Gleitkufe ausgebildete Abschnitt weist beispielsweise seitliche Flanken auf, wobei die seitlichen Flanken zu der Innenseite hin angewinkelt sind. Beispielsweise ist der als Gleitkufe ausgebildete Abschnitt auf der Innenseite konkav gewölbt, so dass die T-Form nicht dahingehend zu verstehen ist, dass die Gleitkufe im Querschnitt gerade ausgebildet sein muss.

Eine Ausdehnung der Strebe entlang der Haupterstreckungsrichtung in einer sekundären Erstreckungsrichtung kann konstant sein oder variieren, beispielsweise von einem mittleren Bereich zu beiden Seiten hin abnehmen. Beispielsweise weist die Strebe entlang der Haupterstreckungsrichtung eine Krümmung auf, welche einer Krümmung des als Gleitkufe ausgebildeten Abschnitts entspricht. Die Strebe ist dadurch dem Verlauf des als Gleitkufe ausgebildeten Abschnitts vorteilhaft angepasst.

Die Offenbarung ist nicht auf eine Tragschiene mit nur einer Strebe beschränkt. Der Fachmann erkennt, dass eine Ausführungsform denkbar ist, bei der der als Gleitkufe ausgebildete Abschnitt auf der Innenseite zusätzlich zu der Strebe mindestens eine weitere sich in der Haupterstreckungsrichtung erstreckende Strebe aufweist, wobei die Streben insbesondere parallel zueinander angeordnet sind.

Ein weiterer Aspekt betrifft einen Ährenheber für ein Mähwerk einer Erntemaschine, welcher die oben genannte Aufgabe löst. Der Ährenheber weist einen Halmheber und eine den Halmheber tragende Tragschiene, wie zuvor beschrieben, auf.

Der Halmheber ist beispielsweise an dem zweiten Ende der Tragschiene angeordnet, wobei der als Gleitkufe ausgebildete Abschnitt sich an das zweite Ende anschließt und wobei die Strebe sich bis zu dem Halmheber erstreckt. Der Halmheber kann im Querschnitt ein V-förmiges Profil aufweisen, wobei die Strebe sich bis in das V-förmige Profil hinein erstreckt, so dass ein Ende der Strebe zwischen den Flanken des V-förmigen Profils angeordnet ist. Gegebenenfalls ist die Strebe mit dem Halmheber verbunden.

Nachfolgend werden weitere Merkmale und Vorteile anhand von Ausführungsbeispielen mit Bezug auf die beiliegenden Zeichnungen näher erläutert. Die Ausführungen sind lediglich beispielhaft und schränken den allgemeinen Erfindungsgedanken nicht ein.

Es zeigen
Figur 1 ein Ausführungsbeispiel eines Ährenhebers mit einer Tragschiene in einer perspektivischen Ansicht;
Figuren 2a und 2b zwei perspektivische Detailansichten einer Ausführungsform der Tragschiene gemäß der zweiten erfindungsgemäßen Variante;
Figuren 3a und 3b zwei perspektivische Detailansichten einer weiteren Ausführungsform der Tragschiene gemäß der zweiten erfindungsgemäßen Variante;
Figuren 4a und 4b zwei perspektivische Detailansichten einer Ausführungsform der Tragschiene gemäß der ersten erfindungsgemäßen Variante.

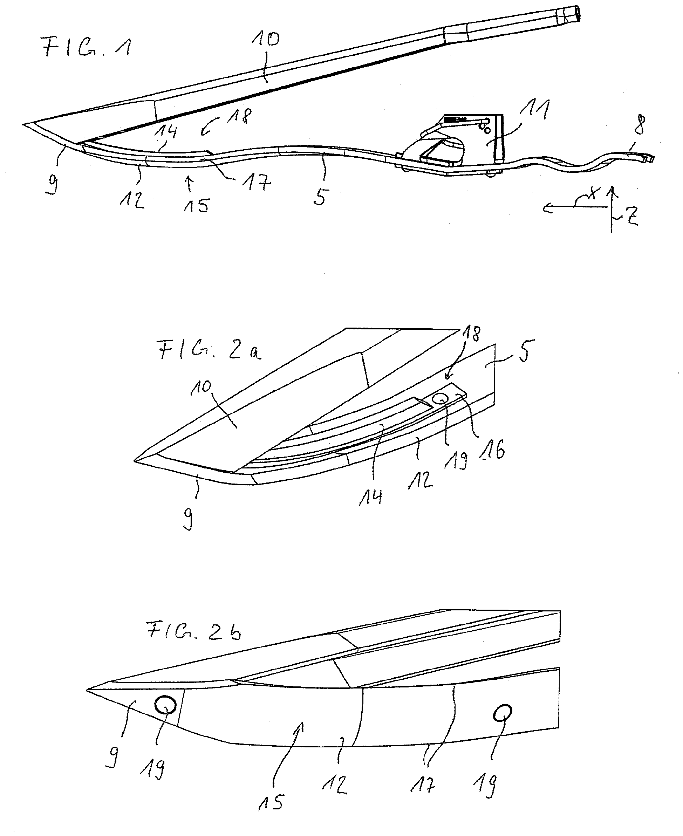

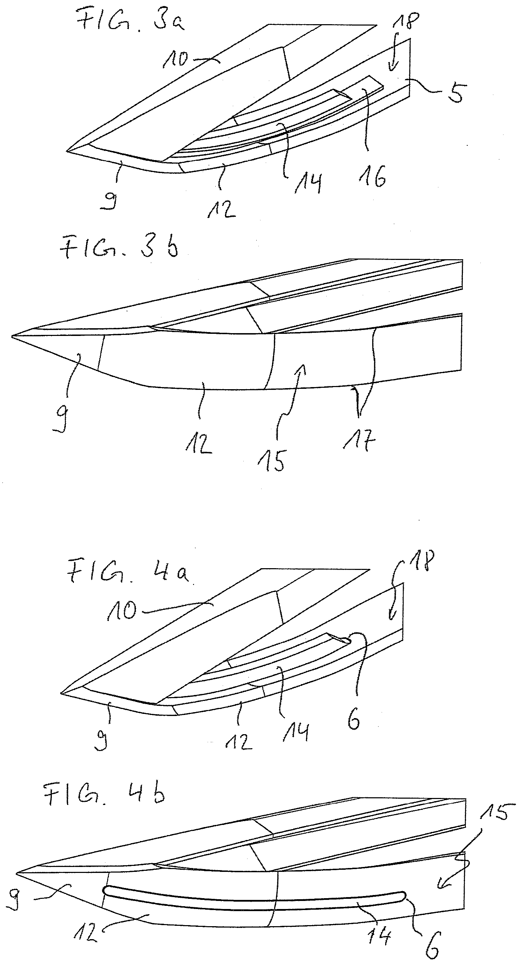

In der Figur 1 ist ein Ausführungsbeispiel eines Ährenhebers mit einer Tragschiene 5 gemäß dem Oberbegriff der nebengeordneten Ansprüche dargestellt. Die charakterisierenden Merkmale gemäß einer ersten erfindungsgemäßen Variante werden im Zusammenhang mit den Figuren 4a und 4b beschrieben. Die charakterisierenden Merkmale gemäß einer zwei ten erfindungsgemäßen Variante werden im Zusammenhang mit den Figuren 2a, 2b sowie 3a und 3b beschrieben. Ein erstes Ende 8 der aus einem Flachmaterial als Ausgangsmaterial hergestellten Tragschiene 5 ist zur Befestigung an einem nicht dargestellten Mähbalken einer Erntemaschine vorgesehen. An einem von dem ersten Ende 8 entfernten, zweiten Ende 9 ist an der Tragschiene 5 ein Halmheber 10 befestigt, der mit der Tragschiene 5 einen spitzen Winkel einschließt. Die Tragschiene 5 weist einen Halter 11 auf, welcher zur Abstützung an einem ebenfalls nicht dargestellten Mähfinger vorgesehen ist. Die Tragschiene 5 erstreckt sich entlang einer Haupterstreckungsrichtung X von dem ersten Ende 8 bis zu dem zweiten Ende 9. Eine Außenseite 15 ist im Betrieb an einer Erntemaschine dem Boden zugewandt. Der als Gleitkufe gestaltete Abschnitt 12 der Tragschiene 5 ist dazu vorgesehen, über den nicht dargestellten Boden zu gleiten und unterliegt dementsprechend einem erheblichen Verschleiß. Von einer Innenseite 18 gesehen ist die Tragschiene 5 im Bereich der Gleitkufe 12 konkav gewölbt, so dass Flanken 17 der Gleitkufe 12 im Betrieb mit dem Boden 6 einen spitzen Winkel einschließen.

Der als Gleitkufe ausgebildete Abschnitt 12 ist dazu vorgesehen, mit der Außenseite 15 über den Boden geführt zu werden. Der als Gleitkufe ausgebildete Abschnitt 12 weist eine Strebe 14 auf, wobei die Strebe 14 sich auf der der Außenseite 15 gegenüberliegenden Innenseite 18 in der Haupterstreckungsrichtung X der Tragschiene 5 erstreckt. Da die Haupterstreckungsrichtung X der Tragschiene 5 mit derjenigen der Strebe 14 übereinstimmt, bezieht sich der Begriff der Haupterstreckungsrichtung X im Folgenden auf beide Bauteile. Eine sekundäre Erstreckungsrichtung Z der rippenförmigen Strebe 14 ist im Wesentlichen orthogonal zu der Haupterstreckungsrichtung X ausgerichtet. Die Richtungspfeile sind nicht als kartesische Koordinatenachsen zu verstehen, sondern sollen lediglich die Erstreckungsrichtungen in der leicht perspektivischen Ansicht verdeutlichen. In den weiteren Figuren sind keine Richtungspfeile angegeben. Es gelten die in Figur 1 angegebenen Richtungen sinngemäß für alle Figuren.

In dem Ausführungsbeispiel des Ährenhebers nach Figur 1 ist der Halmheber 10 an dem zweiten Ende 9 der Tragschiene 5 angeordnet, wobei der als Gleitkufe ausgebildete Abschnitt 12 sich an das zweite Ende 9 anschließt und wobei die Strebe 14 sich bis zu dem Halmheber 10 erstreckt. Der Halmheber 10 weist im Querschnitt ein V-förmiges Profil auf, wobei die Strebe 14 sich bis in das V-förmige Profil hinein erstreckt.

Die Figuren 2a und 2b zeigen zwei Teilansichten einer Ausführungsform der Tragschiene 5 für einen Ährenheber gemäß Figur 1, von der der als Gleitkufe ausgebildete Abschnitt 12 im Detail dargestellt ist. Beide Figuren werden gemeinsam beschrieben. Eine Ausdehnung der Strebe 14 entlang der Haupterstreckungsrichtung X in einer sekundären Erstreckungsrichtung Z (vgl. Figur 1) ist konstant. Die Strebe 14 weist entlang der Haupterstreckungsrichtung X eine Krümmung auf, welche dem als Gleitkufe ausgebildeten Abschnitt 12 angepasst ist. In der dargestellten erfindungsgemäßen Ausführungsform gemäß der zweiten Variante weist die Strebe 14 eine Grundplatte 16 auf, die mit dem als Gleitkufe ausgebildeten Abschnitt 12 verbunden ist. Die Grundplatte 16 dient der Verbindung der Strebe 14 mit dem als Gleitkufe ausgebildeten Abschnitt 12, welche hier durch Befestigungsmittel in Form von Nieten 19 hergestellt ist.

Die Figuren 3a und 3b zeigen zwei Teilansichten einer weiteren Ausführungsform der Tragschiene 5 gemäß der zweiten erfindungsgemäßen Variante für einen Ährenheber gemäß Figur 1, von der der als Gleitkufe ausgebildete Abschnitt 12 im Detail dargestellt ist. Beide Figuren werden gemeinsam beschrieben. Die Ausführungsform unterscheidet sich von der in den Figuren 2a und 2b dargestellten Ausführungsform dadurch, dass die Grundplatte 16 auf andere Weise mit dem als Gleitkufe ausgebildeten Abschnitt 12 verbunden ist, nämlich ohne Befestigungsmittel. Die Grundplatte 16 ist mit dem als Gleitkufe ausgebildeten Abschnitt 12 beispielsweise durch eine Klebeverbindung, eine Lötverbindung oder durch eine Schweißverbindung verbunden.

Die Figuren 4a und 4b zeigen zwei Teilansichten einer Ausführungsform der Tragschiene 5 gemäß der ersten erfindungsgemäßen Variante für einen Ährenheber gemäß Figur 1, von der der als Gleitkufe ausgebildete Abschnitt 12 im Detail dargestellt ist. Beide Figuren werden gemeinsam beschrieben. Die Ausführungsform unterscheidet sich von der in den Figuren 2a und 2b dargestellten Ausführungsform dadurch, dass die Strebe 14 auf andere Weise mit dem als Gleitkufe ausgebildeten Abschnitt 12 verbunden ist. Die Strebe weist keine Grundplatte auf, sondern ist in eine schlitzartige Ausnehmung 6 des als Gleitkufe ausgebildeten Abschnitts 12 eingesetzt. Die Ausnehmung 6 verläuft entlang der Haupterstreckungsrichtung X (vgl. Figur 1) und ist durchgehend von der Innenseite 18 zu der Außenseite 15 ausgeführt. Die Strebe 14 schließt beispielsweise bündig mit der Außenseite 15 ab. Auf der Innenseite 18 steht die Strebe 14 beispielsweise hervor.

Die Strebe 14 ist mit dem als Gleitkufe ausgebildeten Abschnitt 12 verbunden, beispielsweise stoffschlüssig durch eine Schweißverbindung (nicht dargestellt). Alternativ besteht auch bei der Ausführungsform gemäß der Figuren 4a und 4b die Option, die Strebe 14 mittels einer Nietverbindung an dem als Gleitkufe ausgebildeten Abschnitt 12 zu befestigen. Beispielsweise sind die Niete (nicht dargestellt) als hervorstehende Ausformungen an der Strebe 14 vorgefertigt. Nachdem die Strebe 14 in die Ausnehmung 6 eingesetzt ist, werden die hervorstehenden Niete von der Außenseite 15 bearbeitet, so dass die Strebe 14 fest verbunden ist. Insbesondere sind die Niete an den Enden der Strebe 14 vorgesehen, welche dann durch Verformung in die Enden der Ausnehmung 6 hinein getrieben werden, um die Verbindung herzustellen. Eine weitere Alternative besteht darin, die Ausnehmung nicht schlitzartig auszuführen, sondern statt dessen mehrere Bohrungen vorzusehen, wobei die als hervorstehende Ausformungen an der Strebe 14 vorgefertigten Niete in die Bohrungen eingesetzt und darin vernietet werden. In dem Fall ist mit Ausnahme der Niete die Strebe 14 auf der Innenseite 15 angeordnet.

Eine weitere Alternative der Ausführungsform gemäß der Figuren 4a und 4b besteht darin, dass die Strebe 14 auf der Außenseite 15 hervorsteht, insbesondere ebenso wie auf der Innenseite 18, um so vorteilhaft den Verschleiß an der Außenseite 15 weiter zu verringern.

### Bezugszeichenliste

- 5: Tragschiene
- 6: Schlitzartige Ausnehmung
- 8: Erstes Ende der Tragschiene
- 9: Zweites Ende der Tragschiene
- 10: Halmheber
- 11: Halter
- 12: Als Gleitkufe ausgebildeter Abschnitt
- 14: Strebe
- 15: Außenseite
- 16: Grundplatte
- 17: Flanke
- 18: Innenseite
- 19: Niete
- X: Haupterstreckungsrichtung, Längsachse
- Z: Sekundäre Erstreckungsrichtung

## Patentansprüche

1. Tragschiene (5) eines Ährenhebers für Erntegut, mit einer Haupterstreckungsrichtung (X), wobei zwischen einem ersten Ende (8) und einem zweiten Ende (9) der Tragschiene ein als Gleitkufe ausgebildeter Abschnitt (12) angeordnet ist, wobei der als Gleitkufe ausgebildete Abschnitt dazu vorgesehen ist, mit einer Außenseite (15) über einen Boden geführt zu werden,
wobei der als Gleitkufe ausgebildete Abschnitt (12) eine Strebe (14) aufweist, wobei die Strebe sich auf einer der Außenseite (15) gegenüberliegenden Innenseite (18) in der Haupterstreckungsrichtung (X) erstreckt,
**dadurch gekennzeichnet, dass** die Strebe (14) in eine Ausnehmung des als Gleitkufe ausgebildeten Abschnitts (12) eingesetzt ist.

2. Tragschiene (5) eines Ährenhebers für Erntegut, mit einer Haupterstreckungsrichtung (X), wobei zwischen einem ersten Ende (8) und einem zweiten Ende (9) der Tragschiene ein als Gleitkufe ausgebildeter Abschnitt (12) angeordnet ist, wobei der als Gleitkufe ausgebildete Abschnitt dazu vorgesehen ist, mit einer Außenseite (15) über einen Boden geführt zu werden,
wobei der als Gleitkufe ausgebildete Abschnitt (12) eine Strebe (14) aufweist, wobei die Strebe sich auf einer der Außenseite (15) gegenüberliegenden Innenseite (18) in der Haupterstreckungsrichtung (X) erstreckt,
**dadurch gekennzeichnet, dass** die Strebe (14) eine Grundplatte (16) aufweist, wobei die Grundplatte mit dem als Gleitkufe ausgebildeten Abschnitt (12) verbunden ist.

3. Tragschiene nach einem der vorhergehenden Ansprüche, **dadurch gekennzeichnet, dass** die Strebe (14) an der Innenseite (18) mit dem als Gleitkufe ausgebildeten Abschnitt (12) verbunden ist.

4. Tragschiene nach einem der vorhergehenden Ansprüche, **dadurch gekennzeichnet, dass** die Strebe (14) aus einem anderen Material gefertigt ist, als der als Gleitkufe ausgebildete Abschnitt (12).

5. Tragschiene nach Anspruch 1, **dadurch gekennzeichnet, dass** die Strebe (14) auf der der Innenseite (18) über den als Gleitkufe ausgebildeten Abschnitt (12) hinausragt.

6. Tragschiene nach einem der vorhergehenden Ansprüche, **dadurch gekennzeichnet, dass** die Strebe (14) rippenförmig ausgebildet ist, wobei die Strebe mit dem als Gleitkufe ausgebildeten Abschnitt (12) einen T-förmigen Querschnitt in einem Schnitt quer zu der Haupterstreckungsrichtung (X) aufweist.

7. Tragschiene nach einem der vorhergehenden Ansprüche, **dadurch gekennzeichnet, dass** die Strebe (14) entlang der Haupterstreckungsrichtung (X) eine Krümmung aufweist, welche einer Krümmung des als Gleitkufe ausgebildeten Abschnitts (12) entspricht.

8. Tragschiene nach einem der vorhergehenden Ansprüche, **dadurch gekennzeichnet, dass** der als Gleitkufe ausgebildete Abschnitt (12) seitliche Flanken (17) aufweist, wobei die seitlichen Flanken zu der Innenseite (18) hin angewinkelt sind.

9. Tragschiene nach einem der vorhergehenden Ansprüche, **dadurch gekennzeichnet, dass** der als Gleitkufe ausgebildete Abschnitt (12) auf der Innenseite (18) zusätzlich zu der Strebe (14) mindestens eine weitere sich in der Haupterstreckungsrichtung (X) erstreckende Strebe aufweist.

10. Ährenheber für ein Mähwerk einer Erntemaschine, mit einem Halmheber (10) und einer den Halmheber tragenden Tragschiene (5) nach einem der vorhergehenden Ansprüche.

11. Ährenheber nach Anspruch 10, **dadurch gekennzeichnet, dass** der Halmheber (10) an dem zweiten Ende (9) der Tragschiene angeordnet ist, wobei der als Gleitkufe ausgebildete Abschnitt (12) sich an das zweite Ende anschließt und wobei die Strebe (14) sich bis zu dem Halmheber erstreckt.

12. Ährenheber nach Anspruch 11, **dadurch gekennzeichnet, dass** der Halmheber (10) im Querschnitt ein V-förmiges Profil aufweist, wobei die Strebe (14) sich bis in das V-förmige Profil hinein erstreckt

## Claims

1. Support rail (5) of an ear lifter for crops, with a major direction of extension (X), wherein a section (12) formed as a skid is arranged between a first end (8) and a second end (9) of the support rail, wherein the section formed as a skid is configured to be guided with its outer side (15) over a ground, wherein the section (12) formed as a skid comprises a bar (14), wherein the bar extends in the major direction of extension (X) on an inner side (18) opposite the outer side (15),
**characterized in that** the bar (14) is inserted into a recess of the section (12) formed as a skid.

2. Support rail (5) of an ear lifter for crops, with a major direction of extension (X), wherein a section (12) formed as a skid is arranged between a first end (8) and a second end (9) of the support rail, wherein the section formed as a skid is configured to be guided with its outer side (15) over a ground, wherein the section (12) formed as a skid comprises a bar (14), wherein the bar extends in the major direction of extension (X) on an inner side (18) opposite the outer side (15),
**characterized in that** the bar (14) has a base plate (16), wherein the base plate is connected to the section (12) formed as a skid.

3. Support rail according to one of the preceding claims, **characterized in that** the bar (14) is connected on the inner side (18) to the section (12) formed as a skid.

4. Support rail according to one of the preceding claims, **characterized in that** the bar (14) is made of a different material than the section (12) formed as a skid.

5. Support rail according to claim 1, **characterized in that** the bar (14) projects on the inner side (18) beyond the section (12) formed as a skid.

6. Support rail according to one of the preceding claims, **characterized in that** the bar (14) is formed in the shape of a rib, wherein the bar with the section (12) formed as a skid has a T-shaped cross-section in a section transverse to the major direction of extension (X).

7. Support rail according to one of the preceding claims, **characterized in that** the bar (14) has a curvature along the major direction of extension (X) which corresponds to a curvature of the section (12) formed as a skid.

8. Support rail according to one of the preceding claims, **characterized in that** the section (12) formed as a skid has lateral flanks (17), wherein the lateral flanks are angled towards the inner side (18).

9. Support rail according to one of the preceding claims, **characterized in that** the section (12) formed as a skid has on the inner side (18), in addition to the bar (14), at least one further bar extending in the major direction of extension (X).

10. Ear lifter for a mowing unit of a harvesting machine, comprising a stalk lifter (10) and a support rail (5) according to one of the preceding claims, the support rail (5) supporting the stalk lifter.

11. Ear lifter according to claim 10, **characterized in that** the stalk lifter (10) is arranged at the second end (9) of the support rail, wherein the section (12) formed as a skid is adjacent to the second end and wherein the bar (14) extends to the stalk lifter.

12. Ear lifter according to claim 11, **characterized in that** the stalk lifter (10) has a V-shaped profile in cross-section, wherein the bar (14) extends into the V-shaped profile.

## Revendications

1. Rail de support (5) d'un releveur d'épis pour un produit à récolter, avec une direction d'extension principale (X), sachant qu'une section (12) constituée sous la forme de patin est disposée entre une première extrémité (8) et une deuxième extrémité (9) du rail de support, sachant que la section constituée sous la forme de patin est prévue pour être guidée avec un côté extérieur (15) au-dessus d'un sol,
sachant que la section (12) constituée sous la forme de patin comporte une contrefiche (14),
sachant que la contrefiche s'étend sur un côté intérieur (18) opposé au côté extérieur (15) dans la direction d'extension principale (X),
***caractérisé en ce que*** la contrefiche (14) est insérée dans un évidement de la section (12) constituée sous la forme de patin de glissement.

2. Rail de support (5) d'un releveur d'épis pour un produit à récolter, avec une direction d'extension principale (X), sachant qu'une section (12) constituée sous la forme de patin est disposée entre une première extrémité (8) et une deuxième extrémité (9) du rail de support, sachant que la section constituée sous la forme de patin est prévue pour être guidée avec un côté extérieur (15) au-dessus d'un sol,
sachant que la section (12) constituée sous la forme de patin comporte une contrefiche (14),
sachant que la contrefiche s'étend sur un côté intérieur (18) opposé au côté extérieur (15) dans la direction d'extension principale (X), ***caractérisé en ce que*** la contrefiche (14) comporte une plaque de base (16),
sachant que la plaque de base est reliée à la section (12) constituée sous la forme de patin.

3. Rail de support selon l'une quelconque des revendications précédentes, ***caractérisé en ce que*** la contrefiche (14) est reliée sur le côté intérieur (18) à la section (12) constituée sous la forme de patin.

4. Rail de support selon l'une quelconque des revendications précédentes, ***caractérisé en ce que*** la contrefiche (14) est fabriqué dans un autre matériau que la section (12) constituée sous la forme de patin.

5. Rail de support selon la revendication 1, ***caractérisé en ce que*** la contrefiche (14) dépasse sur le côté intérieur (18) au-dessus de la section (12) constituée sous la forme de patin.

6. Rail de support selon l'une quelconque des revendications précédentes, ***caractérisé en ce que*** la contrefiche (14) est constituée sous la forme d'une nervure, sachant que la contrefiche avec la section (12) constituée sous la forme de patin comporte une section transversale en forme de T dans une coupe transversalement à la direction d'extension principale (X) .

7. Rail de support selon l'une quelconque des revendications précédentes, ***caractérisé en ce que*** la contrefiche (14) comporte le long de la direction d'extension principale (X) une courbure, laquelle correspond à une courbure de la section (12) constituée sous la forme de patin.

8. Rail de support selon l'une quelconque des revendications précédentes, ***caractérisé en ce que*** la section (12) constituée sous la forme de patin comporte des flancs latéraux (17), sachant que les flancs latéraux sont inclinés par rapport au côté intérieur (18) .

9. Rail de support selon l'une quelconque des revendications précédentes, ***caractérisé en ce que*** la section (12) constituée sous la forme de patin comporte sur le côté intérieur (18) en plus de la contrefiche (14) au moins une autre contrefiche s'étendant dans la direction d'extension principale (X).

10. Releveur d'épis pour une barre de coupe d'une moissonneuse, avec un releveur de tiges (10) et un rail de support (5) selon l'une quelconque des revendications précédentes, le rail de support (5) portant le releveur de tiges.

11. Releveur d'épis selon la revendication 10, ***caractérisé en ce que*** le releveur de tiges (10) est disposé sur la deuxième extrémité (9) du rail de support, sachant que la section (12) constituée sous la forme de patin se raccorde à la deuxième extrémité et sachant que la contrefiche (14) s'étend jusqu'au releveur de tige.

12. Releveur d'épis selon la revendication 11, ***caractérisé en ce que*** le releveur de tiges (10) comporte en section transversale un profilé en forme de V, sachant que la contrefiche (14) s'étend jusque dans le profilé en forme de V.
